Europäisches Patentamt

European Patent Office

Office européen des brevets

(11) Publication number : **0 562 703 A1**

## (12) EUROPEAN PATENT APPLICATION

(21) Application number : 93300409.5

(22) Date of filing : 21.01.93

(51) Int. Cl.$^5$ : **B29C 41/18**, B29C 41/00, C08L 23/10, C08L 23/16

(30) Priority : 26.03.92 JP 68131/92

(43) Date of publication of application :
29.09.93 Bulletin 93/39

(84) Designated Contracting States :
DE FR GB IT NL

(71) Applicant : SUMITOMO CHEMICAL
COMPANY, LIMITED
5-33 Kitahama 4-chome Chuo-ku
Osaka-shi Osaka (JP)

(72) Inventor : **Mendori, Hiroaki**
1-9, Yushudainishi
Ichihara-shi, Chiba (JP)
Inventor : **Hikasa, Tadashi**
6-3-48, Nagauraekimae
Sodegaura-shi, Chiba (JP)
Inventor : **Hamanaka, Tatsuo**
1-13-53, Aobadai
Ichihara-shi, Chiba (JP)
Inventor : **Tatsumi, Masayuki**
2-29-7, Oike
Ibaraki-shi, Osaka (JP)
Inventor : **Igarashi, Toshio**
59, Shimogamomiyazaki-cho, Sakyo-ku
Kyoto-shi, Kyoto (JP)

(74) Representative : **Myerscough, Philip Boyd**
J.A. Kemp & Co. 14 South Square, Gray's Inn
London WC1R 5LX (GB)

(54) Polyolefine powder for molding at low temperature, powder molding method using the same and molded article thereof.

(57)   A powder for use in low temperature powder molding comprises a thermoplastic resin or thermoplastic elastomer composition, said resin or composition having a complex dynamic viscosity $\eta^*$ (170°C) of $1.5 \times 10^4$ Pas ($1.5 \times 10^5$ poise) or less, as measured at an atmospheric temperature of 170°C and a complex dynamic viscosity $\eta^*$ (250°C) of $5.0 \times 10^3$ Pas ($5.0 \times 10^4$ poise) or less, as measured at an atmospheric temperature of 250°C, in dynamic viscoelasticity measurements at a frequency of 1 radian/sec and a temperature average viscosity index k, calculated from the following formula, of 10 or less :

$$k = \eta^* (170°C)/\eta^* (250°C)$$

Fig. 7

## BACKGROUND OF THE INVENTION

### 1. Field of the Invention

The present invention relates to a powder for powder molding which is moldable at a lower temperature than that for conventional powders, a powder molding method using the same and a molded article thereof.

More specifically, it relates to a powder for powder molding, preferably powder molding such as powder slush molding, which is suitable for use, mainly, as covering materials and housings for molded articles in various fields, irrespective of backing materials,.a powder molding method using the same and a molded article thereof.

### 2. Description of the Related Art

With regard to covering materials used as interior decorative materials for automobiles, there is an increasing demand for those which have a light weight and a good and soft feeling, and which can be given an embossed pattern or stitch pattern to increase the value of molded articles. Also, during the scrapping of cars, acidic substances are generated by a combustion of such interior decorative materials to cause a contamination of the air, and thus create serious social problems such as acid rain, etc., and therefore, there is a strong demand for non-polluting materials.

Known covering materials of the prior art are vacuum molded olefin type thermoplastic elastomer (hereinafter called TPO) sheets and vacuum formed sheets composed mainly of vinyl chloride resins and ABS resins, or rotational molded or slush molded sols composed mainly of vinyl chloride resins for paste and plasticizers (hereinafter called sol moldings).

Vacuum formed TPO sheets attain the objects to provide a light weight and non-polluting material, but it is difficult to impart complicated shapes thereto.

Also, vacuum formed sheets contain a high residual molding stress caused during the forming process, and thus have a drawback in that cracks will appear after long term usage.

Vacuum formed sheets composed mainly of vinyl chloride resins and ABS resins have drawbacks similar to those of vacuum formed TPO sheets in that it is difficult to impart complicated shapes thereto, and further that, compared with TPO, they have the drawback of heavier weight and cause pollution.

Sol moldings composed mainly of vinyl chloride resins for paste and plasticizers give a soft feeling, and complicated shapes can be imparted thereto. However, since the gellation temperature is low, they melt rapidly while being molded, and thus many drawbacks arise, for example, problems in the processing such as flow marks, lip or a sol fiber-forming phenomenon, the inherent problems of vinyl chloride such as a heavier weight and pollution, and further problems in that the inner window glass surface of automobiles produced from said sol molding suffers from hazy appearance due to the use of a large amount of plasticizers.

Due to these drawbacks and problems of the molding method, the powder slush molding method has recently attracted attention.

Powder molding methods include, in general, a flow dipping method, an electrostatic coating method, a flame spray coating method, a powder rotational molding method, and a powder slush molding method, and particularly for an interior decorative materials for automobiles, the powder rotary molding method or the powder slush molding method is most suitable.

A partially crosslinked TPO composition is known from Japanese Unexamined Patent Publications (Kokai) Nos. 48-26838, 53-149240, but the known molding methods currently used for the partially crosslinked TPO are:

a. injection molding (shear rate during processing: $\dot{\gamma} \geqq 10^3$ sec$^{-1}$);

b. extrusion molding ($10^1 \leqq \dot{\gamma} \leqq 10^2$ sec$^{-1}$);

c. calendering ($10^2 \leqq \dot{\gamma} \leqq 10^3$ sec$^{-1}$);

d. compression molding of the primarily processed product in b. or c.; and

e. vacuum forming of the primarily processed product in b. or c.,

but all of these methods require the molding temperatures are higher or equal to the softening point, and the molding pressures must be varied depending on the viscosities and the shear rates corresponding to the respective processing conditions.

Nevertheless, in the molding method such as a powder rotary molding or a powder slush molding at a shear rate of $10^0$ sec$^{-1}$ or less or under an approximately stationary state of the polymer, at a vibration frequency of 1 radian/sec., and with no application of a pressure or under a very low pressure ($\leqq 1$ kg/cm$^2$), the flowability becomes extremely poor, and accordingly, the molding becomes very difficult. Further, even if molding is possible, the poor flowability in the low shear rate region cause an incomplete thermal fusion between powder particles, and only molded articles with a low mechanical strength can be obtained.

To solve these problems mentioned above, Japanese Unexamined Patent Publication (Kokai) No. 2-57309, for example, discloses the following inventions. An embossed thermoplastic elastomer molding and a method of preparing the same, having an emboss pattern formed on the surface by melting a thermoplastic elastomer powder comprising a polyolefin resin and an ethylene-a-olefin copolymer rubber into a flowing plasticized state in a roating and heated mold with an emboss pattern.

According to this method, however, the flowability of TPO powder in the low shear rate region is still poor, and therefore, the thermal fusion strength between powder particles is too low, causing a problem that pinholes, etc. may be formed. Moreover, molding at low temperature is impossible and a molding having a fully satisfactory appearance and physical properties, etc., has not been obtained.

Furthermore, for example, Japanese Unexamined Patent Publication (Kokai) No. 4-10911 discloses a thermoplastic elastomer molded article having an emboss pattern, prepared by allowing a thermoplastic elastomer powder obtained by dynamically heat treating a mixture containing a crosslinking agent and polymer particles which comprise a crystalline olefin polymer portion and an amorphous olefin polymer portion and which have an average particle size of at least 10 μm and an apparent bulk density of at least 0.2 g/ml to closely adhere to and melt the powder on the internal surface of a mold for transferring an emboss pattern in a fluidized plastic state, of which mold is in a rotating and heated state, to form an emboss pattern thereon, and a method for producing the same.

However, also in this case, the flowability of TPO powder in the low shear rate region is insufficient, and the same problems as described above arise. As a result, a sufficiently satisfactory molded article has not been obtained.

Furthermore, for example, Japanese Unexamined Patent Publication (Kokai) No. 2-57310 discloses an embossed thermoplastic elastomer molding and a method of preparing the same, having an emboss pattern formed on the surface produced by spraying of a thermoplastic elastomer powder comprising a polyolefin resin and an ethylene-a-olefin copolymer rubber onto the inner surface of a heated mold with an emboss pattern, thereby melting and adhering said powder to the inner surface of said mold.

According to this method, however, because the powder is fed by a spray gun and adhered to the inner portion of the mold, problems arise in that the sheet thickness of the molding becomes nonuniform, and that pinholes may be formed.

Also, because the powder is sprayed onto a previously heated mold in the open state without being close contact with the powder feeding box and adhered to the inner surface of the mold, the problems arise of a scattering of the powder outside and an entrainment of foreign matter from outside, in addition, low temperature molding is impossible, and a molding fully satisfying the appearance, physical properties and another requirements has not been obtained.

Furthermore, for example, Japanese Unexamined Patent Publication (Kokai) No. 3-286811 discloses a thermoplastic elastomer molded article having an emboss pattern, prepared by allowing a thermoplastic elastomer powder obtained by dynamically heat treating a mixture containing a crosslinking agent and polymer particles which comprise a crystalline olefin polymer portion and an amorphous olefin polymer portion and which have an average particle size of at least 10 μm and an apparent bulk density of at least 0.2 g/ml to melt adhere to the internal surface of a mold for transferring an emboss pattern to form grain patterns thereon and a method for producing the same.

The method is similar to those described above, and TPO having a low flowability in the low shear rate region is allowed to melt adhere to the internal surface of the mold by spraying with a spray gun. Similar problems arise in the method, and moreover low temperature molding is impossible by the method. Sufficiently satisfactory molded articles have not been obtained yet.

In addition to the publications mentioned above, Japanese Unexamined Patent Publication (Kokai) Nos. 4-10910, 4-10912, 4-16313, 4-21407, 4-21408, etc., propose powder molding of TPO. As to the powders, these inventions are characterized by using "polymer particles comprising a crystalline olefin polymer portion and an amorphous olefin polymer portion" or "a mixture comprising a polyolefin resin and an a-olefin copolymer rubber". The method for producing the molded articles of these inventions comprise "placing these powders in metal molds for transferring an emboss pattern, heating the powders while the molds are being rotated to allow them to closely adhere to the internal surface of the molds in a fluidized plastic state and melt" or "allowing these powders to melt adhere to the internal surface of preheated molds for transferring an emboss pattern", in the presence of a crosslinking agent.

However, since these methods conduct molding and crosslinking reaction simultaneously, they have the following disadvantages: the molding cycle becomes long; and the mold temperature must be raised in order to shorten the moldin, cycle. Moreover, there is also a disadvantage that gas sometimes evolves during the reaction, depending on the crosslinking agent to form pinholes on the molded article surface. Furthermore, low temperature molding is impossible, and molded articles having sufficiently satisfactory appearances and physical properties have not been obtained yet.

## SUMMARY OF THE INVENTION

An object of the present invention is to solve the above problems, and provide a powder for powder molding comprising a thermoplastic resin or thermoplastic elastomer which has a high flowability even when the mold temperature is low and substantially no forming pressure is applied, by which a molding having a required high thermal fusion strength between particles can be obtained without pinholes or a uniform section, and capable of being molded at lower temperature than the conventional powders to shorten the molding cycle and extend the mold life, a powder molding method using the same and a molded article thereof.

Other objects and advantages of the present invention will be apparent from the following description.

1) In accordance with the present invention, there is provided a low temperature moldable powder for powder molding comprising a thermoplastic resin or thermoplastic elastomer composition, said resin or composition having a complex dynamic viscosity $\eta*$ (170°C) of $1.5 \times 10^5$ poise or less, as measured at an atmosphere temperature of 170°C and a complex dynamic viscosity $\eta*$ (250°C) of $5.0 \times 10^4$ poise or less, as measured at an atmosphere temperature of 250°C, in dynamic viscoelasticity measurements at a frequency of 1 radian/sec and a temperature average viscosity index k, calculated from the following formula, of 10 or less:

$$k = \eta * (170°C) / \eta * (250°C)$$

2) In accordance with the present invention, there are also provided a powder molding method, wherein the powder comprising the thermoplastic resin or thermoplastic elastomer composition as mentioned above is used, and a molded article obtained thereby.

## BRIEF DESCRIPTION OF THE DRAWINGS

The present invention will be better understood from the description set forth below with reference to the accompanying drawings, wherein:

Fig. 1 is a plan view of a powder feed box of a powder slush molding device used in Examples;

Fig. 2 is an elevational view of a powder feed box of a powder slush molding device used in Examples;

Fig. 3 is a side elevational view of a powder feed box of a powder slush molding device used in Examples;

Fig. 4 is a plan view of a mold of a powder slush molding device used in Examples;

Fig. 5 is an elevational view of a mold of a powder slush molding device used in Examples;

Fig. 6 is a side elevational view of a mold of a powder slush molding device used in the invention, and

Fig. 7 is a graph showing the measurement results of viscoelasticities in Reference Examples 1 to 7 and Comparative Reference Examples 1 to 4.

## DESCRIPTION OF THE PREFERRED EMBODIMENTS

The present invention will now be illustrated in detail hereinbelow.

According to the present invention, the characteristics of powder molding capable of giving molded articles having low residual strain and molding articles having a complicated configuration are utilized, and particularly automobile interior materials such as covering materials from a thermoplastic resin or thermoplastic elastomer excellent in lightweight, non-polluting properties can be provided.

Examples of the powder molding method of the invention include a powder rotary molding method or powder slush molding method. Of these methods, the powder slush molding method is preferred. The powder slush molding method refers to, for example, the molding method as claimed in Japanese Unexamined Patent Publication (Kokai) No. 58-132507.

Namely, the powder slush molding method comprises the steps of fixing a vessel having an opening and containing a necessary amount of a thermoplastic elastomer powder to a mold having an opening heated to a temperature sufficiently higher than the melting temperature of the thermoplastic elastomer powder, with the openings being matched to each other or fixing the vessel in the hollow portion of the mold to be integrated by quickly feeding the powder to the respective portions within the mold while the mold is rotated and/or rocked, to cause the powder to be melted and adhered thereto, and if necessary, discharging the superfluous powder into the vessel.

Specifically, for example, this is a method in which a mold with a surface temperature of 160°C or higher and a vessel having an opening (a powder feeding box), which are integrated, are rotated or rocked to feed the thermoplastic resin or elastomer powder onto the inner surface of the mold through a natural flow, primarily due to the weight of the thermoplastic resin or elastomer powder (without spraying the powder onto the inner surface of the mold by a spray gun etc.), the resin or elastomer powder is melted and adhered to a uniform thickness by a thermal conduction from the mold, unadhered powder is recovered to the powder feeding box, the mold is separated from the powder feeding box, and thereafter, a thermal fusion of the melted and adhered powder is carried out under only the heat possessed by the mold or by an external application of heat followed by cooling and demolding to give a molding with a good appearance and mechanical strength.

The mold heating system to be used in the present invention includes the gas-fired furnace system, heated oil circulation system, dipping into a heated oil or a hot fluidized sand, and a high frequency induction heating system.

The thermoplastic resin or elastomer powder to be used in this powder molding method must have a high powder flowability under a low shear rate and a low pressure, and be easily melted by the heat supplied primarily from the mold.

The specific feature of the present invention resides in a polypropylene or a propylene-a-olefin copolymer resin or in an elastomer composition comprising mixtures of ethylene-a-olefin copolymer rubbers and polyolefin resins, optionally dynamically partially crosslinked therewith in the presence of a crosslinking agent having a certain specific viscoelasticity, and in the use of a thermoplastic resin or elastomer powder obtained by powdering said resin or elastomer composition at a lower temperature than the glass transition temperature. By the use of said thermoplastic resin or elastomer, it has become possible to carry out molding requiring a high flowability under a low shear rate such as a powder rotary molding method and a powder slush molding method.

In the present invention, the thermoplastic resin or thermoplastic elastomer composition has a complex dynamic viscosity $\eta*$ (170°C) of $1.5 \times 10^5$ poise or less, as measured at an atmospheric temperature of 170°C and a complex dynamic viscosity $\eta*$ (250°C) of $5.0 \times 10^4$ poise or less, as measured at an atmospheric temperature of 250°C, in dynamic viscoelasticity measurements at a frequency of 1 radian/sec. Preferably, $\eta*$ (170°C) is $1.0 \times 10^5$ poise or less and $\eta*$ (250°C) is $3.5 \times 10^4$ poise or less. More preferably, $\eta*$ (170°C) is $3.0 \times 10^4$ poise or less and $\eta*$ (250°C) is $1.5 \times 10^4$ poise or less. Particularly preferably, $\eta*$ (170°C) is $3.0 \times 10^4$ poise or less and $\eta*$ (250°C) is $4.5 \times 10^3$ poise or less.

When the complex dynamic viscosity $\eta*$ (170°C), as measured at an atmospheric temperature of 170°C is more than $1.5 \times 10^5$ poise or the complex dynamic viscosity $\eta*$ (250°C), as measured at an atmospheric temperature of 250°C is more than, $5.0 \times 10^4$ poise, the powder produced from such a thermoplastic resin or thermoplastic elastomer composition comes not to melt on the mold at a temperature of less than 210°C and cannot be molded by the powder molding method in which the shear rate during processing is as low as 1 $sec^{-1}$ or less.

Furthermore, in the present invention, the thermoplastic resin or thermoplastic elastomer composition has a temperature average viscosity index k of 10 or less, preferably 8 or less, calculated from the following formula by using the complex dynamic viscosity $\eta*$ (170°C), as measured at an atmospheric temperature of 170°C and the complex dynamic viscosity $\eta*$ (250°C), as measured at an atmospheric temperaturic of 250°C, in dynamic viscoelasticity measurements at a frequency of 1 radian/sec:

$$k = \eta * (170°C) / \eta * (250°C)$$

The thermoplastic resin or thermoplastic elastomer composition having a temperature average viscosity index k exceeding ten exhibits a marked temperature dependence of its complex dynamic viscosity even when it has a complex dynamic viscosity $\eta*$ (170°C) of $1.5 \times 10^5$ poise or less as measured at an atmospheric temperature of 170°C and a complex dynamic viscosity $\eta*$ (250°C) of $5.0 \times 10^4$ poise or less as measured at an atmospheric temperature of 250°C. As a result, only molded articles having a nonuniform thickness can be produced due to the influence of the distribution or change of the mold temperature during processing.

In the present invention, preferably the elastomer composition is pulverized by the freezing pulverization method using liquid $N_2$. Pellets of the thermoplastic resin or thermoplastic elastomer composition cooled to a pulverizing temperature of -40°C or lower, preferably -70°C or lower, more preferably -90°C or lower, can be obtained by the mechanical pulverization method using a hammer mill, a pin mill etc.

If the composition is pulverized at a temperature higher than -40°C, the particle sizes of the pulverized resin or elastomer powder are coarsened, and thus the powder moldabilility is undesirably lowered. To prevent an elevation of the polymer temperature to the glass transition temperature or higher during the pulverization operation, preferably a method having little heat generation and a high pulverization efficiency is employed.

Also, preferably a pulverization apparatus which is cooled by an external cooling source is employed.

During the demolding of the powder molded product by an thermoplastic resin or an elastomer powder, the adhesion thereof to the inner mold surface is sometimes strong, and thus defects such as bending wrinkles or whitening may be generated when the demolding is forcibly attempted. Accordingly, it is often necessary before molding to coat the inner mold surface with a mold release agent generally employed, such as dimethylpolysiloxane. For a continuous production of many moldings, however, the mold release agent must be coated for ever few moldings, which will lead to increased the costs. In such a case, although an improvement of.the mold material is possible, the method of adding 2 parts by weight or less of a methylpolysiloxane compound as the internally added mold release agent per 100 parts by weight of the resin or elastomer composition, or the resin or elastomer powder is effective. The addition in this case may be made either before or after the powdering. In this case, a methylpolysiloxane compound having a viscosity at 25°C of 20 centistokes or more may be employed. The preferable viscosity range is 50 to 5000 centistokes; if the viscosity is too high, the effect of the mold release agent is reduced. On the other hand, if the amount of the internally added mold release agent is larger than 2 parts by weight, the thermal fusion between the resin or elastomer powder particles is inhibited and only a molding having a low mechanical strength can be obtained. Also, the internally added mold release agent bleeds out onto the mold surface, the mold is undesirably contaminated. Further, by controlling the amount of the internally added mold release agent,a reagglomeration after powdering can be reduced.

In the present invention, known heat-resistant stabilizers such as phenol type, sulfite type, phenylalkane type, phosphite type, amine type or amide type stabilizers, antioxidants, weathering resistant stabilizers, antistatic agents, metal soaps, lubricants such as waxes, and pigments for coloration can be formulated in necessary amounts.

The molded articles according to the present invention can be applicable as products in the following various fields.

In the automobile fields, for example, various automobile parts including interior cover materials of, for example, instrument panels, console boxes, arm rests, head rests, door trims, rear panels, pillar trims, sunvisors, trunk room trims, trunk lid trims, air bag covers, seat buckles, head liners, gloves boxes and stearing wheel covers; interior molded articles of, for example, kicking plates and change level boots; exterior parts of, for example, spoilers, side moles, number plate housings, mirror housings, air dam skirt and mud guards; and other molded articles of automobile parts.

In the electric home appliance and office automation device fields, housings and covering materials of the housings for, for example, television sets, video sets, washing machines, dryers, cleaners, coolers, air-conditioners, remote controller cases, electronic ovens, toasters, coffee makers, pots, thermoses, dish washers, electric razors, hair dryers, microphones, head phones, beauty appliances, compact disk cases, cassette tape cases, personal computers, typewriters, light projectors, telephones, copying machines, facsimile machines, telex machines, etc.

In the sport good fields, decorative parts of sport shoes, grips of rackets, sport tools and goods of various ball games, covering materials of saddles and handlebar grips of bicycles, motor-cycles and tricycles, etc.

In the housing and building fields, covering materials of furnitures, desks, chairs, etc.; covering materials of gates, doors, fences, etc.; wall decorative materials; covering materials of curtain walls; indoor flooring materials of kitchens, wash room, toilets, etc.; outdoor flooring materials such as verandas, terraces, balconies, carports, etc.; carpets such as front door or entrance mats, table cloths, coasters, ash tray doilys.

In the industrial part field, grips and hoses for electric tools, etc., and the covering materials thereof; packing materials.

In other fields, covering materials of bags, briefcases, cases, files, pocket books, albums, stationarys, camera bodies, dolls and the other toys, and molded articles such as watch bands, outer frames of picture or photograph and their covering materials.

## EXAMPLES

The present invention will now be described in more detail with reference to the following examples, to which it is in no way limited. The dynamic viscoelasticity, powder properties and moldability of the thermoplastic resin or thermoplastic elastomer compositions, or the thermoplastic resin or thermoplastic elastomer powders, and the tensile properties of the molded sheets in Examples and Comparative Examples were determined by the following methods.

## Dynamic viscoelasticity of resin or elastomer compositions

The dynamic viscoelasticities at a vibration frequency of 1 radian/sec were measured at atmosphere temperatures of 170°C and 250°C in the parallel plate mode under the conditions of an applied strain of 5% by using a dynamic analyzer Model RDS-7700 manufactured by Rhenometrics Co.

The temperature average viscosity index k was calculated according to the following formula, based on the results of $\eta*$ (170°C) and $\eta*$ (250°C):

$$k = \eta * (170°C)/\eta * (250°C)$$

## Powder flowability of resin or elastomer powders

The resin or elastomer powder in an amount of 100 ml was charged to a funnel of a bulk specific gravity measuring device as specified in JIS (Japanese Industrial Standard) K-6721. The dumper was withdrawn, and the time (sec) from the start of the powder dropping until all the powder had dropped was measured.

The shorter the time, the better the powder flowability.

## Preliminary evaluation of powder moldability of resin or elastomer powders

### (1) Powder Moldability

An amount 500 g of the resin or elastomer powder was fed onto a nickel electroformed embossed plate having a size of 30 cm x 30 cm and a thickness of 3 mm, heated to a surface temperature of 170°C, and adhered for 14 seconds, followed by a discharge of unadhered powder of said resin or elastomer powder, and the powder adhered on embossed plate was heated and melted in a heating furnace under an atmosphere temperature of 170°C for 60 seconds. The powder slush moldability was preliminary evaluated according to the following standards, from the fused state of the powder on the mold and the properties of the molded sheet obtained by demolding after water cooling the mold to 70°C:

◎:      Sufficient mutual fusion among powder particles was observed, and the resultant molded sheet had no pinholes;

○:      Sufficient mutual fusion among powder particles was observed, and the resultant molded sheet had rarely pinholes;

△:      Although mutual fusion among powder particles was observed, the resultant molded sheet markedly had pinholes; and

X:      Powder particles of the composition were not mutually fused, and remained as a powder on the mold.

◎ and ○ mean that the powder can be processed to give a final product, and △ and X mean that a final product cannot be obtained by processing the powder.

### (2) Demolding force

An amount 250 g of the resin or elastomer powder was feeded onto a nickel electroformed embossed plate having a size of 150 mm x 300 mm and a thickness of 3 mm, heated to a surface temperature of 170°C, and adhered for 15 seconds, followed by a discharge of unadhered powder of said resin or elastomer powder, and the powder-adhered embossed plate was heated and melted in a heating furnace under an atmosphere temperature of 170°C for 60 seconds. Then, the mold temperature was cooled to 70°C, at which a mold release was effected. This operation was repeated 10 times, and on the 10th mold release, the demolding force (peeling strength) between the molded sheet and the mold was measured by using a spring weighing scale. The best demoldability is exhibited at the smallest demolding force per width of 125 mm.

## Physical properties of molded sheet

The molded sheet obtained in the preliminary evaluation of the powder moldability test was punched to form a No. 1 dumbbel test sample as described in JIS K-6301, conditioned under the conditions of 23°C, 50% RH for 24 hours, and then a tensile test was conducted under the same conditions by a tensile tester at a tensile speed of 200 mm/min. to measure the tensile strength at break and the elongation at break.

## Reference Example 1

To 100 parts by weight of a propylene-butene-1 random copolymer resin (butene-1 content = 24.4% by weight, MFR = 2.2 g/10 min) was added 1.45 parts by weight of an organic peroxide (Perhexa® 25B manufactured by Nippon Yushi K.K.), and the mixture was subjected to a decomposition reaction at 220°C by using a single screw extruder 65 mm in diameter to obtain resin pellets having a MFR of 120 g/10 min. The resin pellets were cooled to -100°C with liquid nitrogen and then freeze pulverized to obtain a thermoplastic resin powder.

The powder moldability of the resultant powder was preliminarily evaluated, and the results are listed in Table 1.

Reference Example 2

Resin pellets having a MFR of 100 g/10 min was obtained in the same manner as in Reference Example 1 except that a propylene-ethylene random copolymer resin (ethylene content = 6% by weight, MFR = 10 g/10 min) was used as the thermoplastic resin and the amount of the organic peroxide was changed to 1.10 parts by weight. The resin pellets were then freeze pulverized under the same conditions as in Reference Example 1 to obtain a thermoplastic resin powder.

Reference Example 3

A mixture of 45 parts by weight of an oil-extended EPDM ($ML_{1+4}$ at 100°C = 53) obtained by adding 100 parts by weight of a mineral oil type softener (Diana Process® PW-380 manufactured by Idemitsu Kosan Co., Ltd.) to 100 parts by weight of EPDM ($ML_{1+4}$ at 100°C = 242, propylene content = 28% by weight, iodine value = 12), 55 parts by weight of the resin pellets obtained in Reference Example 1, 0.4 part by weight of a crosslinking coagent (sumifine® BM-bismaleimide compound manufactured by Sumitomo Chemical Co., Ltd.) and 0.2 part by weight of a releasing agent (SH® 200, viscosity = 100 cSt, manufactured by Toray Silicone Co., Ltd.) was kneaded by a Banbury mixer for 10 minutes and extruded to form a masterbatch (referred to as "M.B." hereinafter) for crosslinking in a pellet form.

To 100 parts by weight of the M.B. was added 0.04 part by weight of an organic peroxide (sanperox® APO manufactured by Sanken Chemical Co., Ltd.), and a dynamic crosslinking was carried out at 220°C by using a twin screw extruder (TEX®-44 manufactured by The Japan steel works, Ltd.) to obtain pellets of the elastomer composition. The pellets were freeze-pulverized under the same conditions as in Reference Example 1 to obtain a thermoplastic elastomer powder.

Reference Example 4

A thermoplastic elastomer powder was obtained in the same manner as in Reference Example 3 except that the oil-extended EPDM was used in an amount of 40 parts by weight and 60 parts by weight of the resin pellets obtained in Reference Example 2 was used.

Reference Example 5

A thermoplastic elastomer powder was obtained in the same manner as in Reference Example 4 except that the oil-extended EPDM was used in an amount of 36.4 parts by weight, that 54.5 parts by weight of the resin pellets and 9.1 parts by weight of a polyisobutylene (Tetrax®3T, viscosity average molecular weight=30000, manufactured by Nippon Petrochemicals Co., Ltd.) were used and that the organic peroxide (Sanperox® APO manufactured by Sanken Chemical Co., Ltd.) was used for dynamic crosslinking in an amount of 0.12 part by weight.

Reference Example 6

A thermoplastic elastomer powder was obtained in the same manner as in Reference Example 3 except that the oil-extended EPDM was used in an amount of 30 parts by weight and 10 parts by weight of an ethylene-butene copolymer rubber (Tafmer®A-4085 manufactured by Mitsui Petrochemical Industries, Ltd.) was further used.

Reference Example 7

A M.B. for crosslinking was obtained in the same manner as in Reference Example 3 except that the crosslinking coagent (Sumifine® BM-bismaleimide compound manufactured by Sumitomo Chemical Co., Ltd.) was not added. A thermoplastic elastomer powder was obtained in the same manner as in Reference Example 3 except that 2 parts by weight of a mixture composed of 20% by weight of 1,3-bis(tert-butylperoxyisopropyl)benzene, 30% by weight of divinylbenzene and 50% by weight of a paraffinic mineral oil was added as a crosslinking agent.

Comparative Reference Example 1

A thermoplastic resin powder was obtained by freeze pulverizing pellets of a propylene-ethylene random copolymer resin (ethylene content = 6% by weight, MFR = 1.5 g/10 min) in the same manner as in Reference Example 1.

Comparative Reference Example 2

A thermoplastic elastomer powder was obtained in the same manner as in Reference Example 4 except that the oil-extended EPDM was used in an amount of 70 parts by weight and 30 parts by weight of another propyleneethylene random copolymer resin (ethylene content = 3%, MFR = 60 g/10 min) was used.

Comparative Reference Example 3

Elastomer pellets were prepared in the same manner as in Reference Example 4 except that the oil extended EPDM in an amount of 50 parts by weight and an ethylenepropylene copolymer rubber ($ML_{1+4}$ at 100°C = 40, propylene content = 53% by weight) in an amount of 20 parts by weight (70 parts by weight in total) were used and that the propylene-ethylene copolymer resin employed in Comparative Reference Example 2 was used in an amount of 30 parts by weight. The resultant elastomer pellets were cooled to -80°C and freeze pulverized to obtain a thermoplastic powder.

Comparative Reference Example 4

A vinyl chloride resin (Sumilit® SX 8G manufactured by Sumitomo chemical co., Ltd.) obtained by conventional suspension polymerization was placed in a super mixer and stirred at a constant rotation rate while heated. when the resin reached a temperature of 80°C, 70 parts by weight of a plasticizer (diisodecyl phthalate), 3 parts by weight of a thermal stabilizer (Ba/Zn type), 2 parts by weight of an epoxidized soybean oil, a pigment and a light stabilizer were added thereto, and the resulting mixture was dry blended. The resulting composition was cooled to a temperature of 50°C or less when it reached a temperature of 120°C, and a vinyl chloride resin (Sumilit® PX-Q manufactured by Sumitomo Chemical co., Ltd.) in fine particles was unifonmly dispersed therein to obtain a thermoplastic resin powder.

Example 1

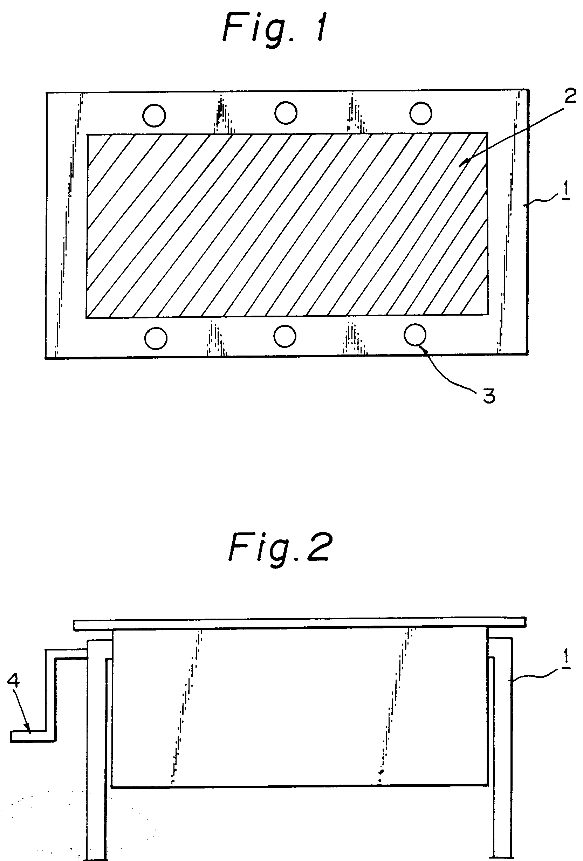

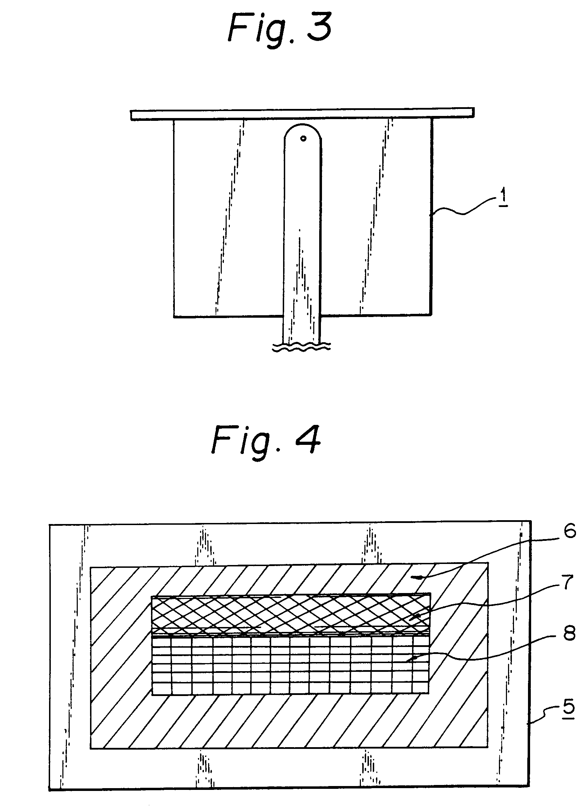

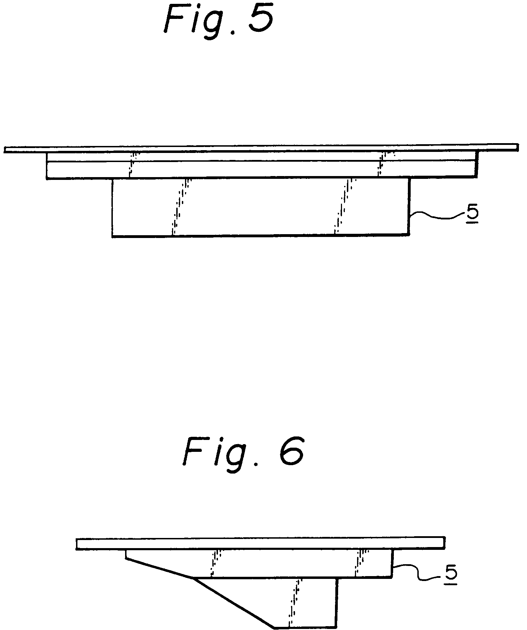

A amount of 4 kg of the thermoplastic elastomer powder obtained in Reference Example 3 was thrown into a stainless steel square vessel (i.e., a powder feeding box) 1 210 mm deep having a rectangular opening 2, 600 mm x 220 mm and being mounted on a monoaxial rotational device 4 as shown in Figs. 1 to 3. On the other hand, a nickel electroformed mold 5 having a 3 mm thickness as shown in Figs. 4 to 6, provided with an opening 6 having the same size as that of the opening 2 of the powder feeding box, having rope patterns 7 and leather emboss pattern 8 and shaped into a complicated configuration was preheated in a gas oven heated at 300°C. Immediately after the surface temperature of the mold reached 170°C, the heated mold was aligned with the opening 2 of the above-mentioned powder feeding box in such a manner that the opening 6, 600 mm x 220 mm, faced downward and an outer frame mounted around both openings was brought into close contact therewith, and the mold and box were then integrally fixed together by a clip 3. The assembly was immediately clockwise rotated by two turns at 30 rpm and then counterclockwise rotated by two turns at 30 rpm. Thereafter, the assembly was clockwise shaken once through an angle of about 120° and counterclockwise shaken once through an angle of about 120°, to shake off excess powder adhering to the portion having a complicated configuration.

The rotation and shaking operation was stopped such that the opening 6 of the mold faced downward. The mold was then taken out of the powder feeding box, heated in a heating oven at 300°C for 30 sec and cooled with water. The molded sheet was then removed.

The resultant molded sheet 120 g in weight and 0.6 mm thick was free from underfill, and the rope patterns and the leather emboss pattern were exactly reproduced. The molded sheet was obtained as a pinhole-free product in which a minute portion of the mold having a complicated configuration was sufficiently reproduced and which was excellent in even thickness.

A amount of 3.88 kg of the elastomer powder free from the inclusion of foreign matter was recovered in the vessel. An unused portion of the elastomer powder was added to the recovered elastomer powder, to a total weight of 4 kg, and the mixture was molded in the same manner as described above to obtain a product excellent in an appearance and an even thickness.

## Example 2

A molded sheet was demolded in the same manner as in Example 1 except that the thermoplastic elastomer powder obtained in Reference Example 4 was used and that the integrally fixed device was rotated through an angle of 180° at 30 rpm to become a state where the opening 6 of the mold faced upward, maintained in the state for 15 sec, and rotated through an angle of 180° in the same direction at the same rate to become a state where the opening 6 of the mold faced downward instead of rotating the integrally fixed device clockwise by two turns and counterclockwise by two turns at 30 rpm. The molded sheet could be easily removed, and the demoldability was good.

The resultant molded sheet 220 g in weight and 1.3 mm thick was free from underfill, and the rope patterns and the leather emboss pattern were exactly reproduced. The molded sheet was obtained as a pinhole-free product in which a minute portion of the mold having a complicated configuration was sufficiently reproduced and which was excellent in even thickness.

## Example 3

The procedure of Example 2 was repeated until the mold was taken out from the powder feeding box except that the integrally fixed device was maintained in the state of having been rotated through 180° for 7 sec instead of 15 sec. The detached mold was allowed to stand to cool for 1 min at room temperature, and the molded sheet was demolded. The molded sheet could be easily removed, and the domoldability was good.

The resultant molded sheet 130 g in weight and 0.8 mm thick was free from underfill, and the rope patterns and the leather emboss pattern were exactly reproduced. The molded sheet was obtained as a pinhole-free product in which a minute portion of the mold having a complicated configuration was sufficiently reproduced and which was excellent in even thickness.

## Comparative Example 1

The procedure of Example 1 was repeated except that the thermoplastic elastomer powder obtained in Comparative Reference Example 2 was used instead of the one obtained in Reference Example 3.

The powder particles fused together in the resulting molded article, but the fusion was insufficient. As a result, the molded article was so brittle that the tensile strength could not be measured.

## Comparative Example 2

The procedure of Example 2 was repeated except that the thermoplastic elastomer powder obtained in Comparative Reference Example 4 was used instead of the one obtained in Reference Example 4.

The powder particles fused together in the resulting molded article, but the fusion was insufficient. As a result, the molded article was so brittle that the tensile strength could not be measured.

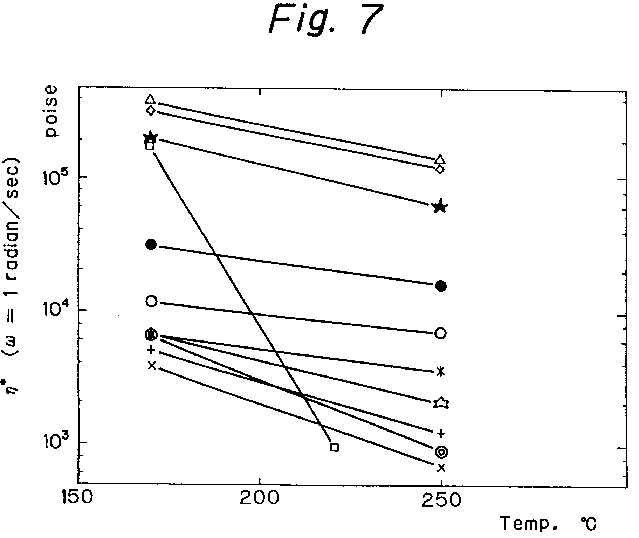

The preliminary evaluation results of the powder moldability in Reference Examples 1 to 7 and Comparative Reference Examples 1 to 4 are shown in Tables 1 to 4 and Tables 5 to 6, respectively. Fig. 7 shows the dynamic viscoelasticity measurement results and the marks therein denote the following results: ◎ in Reference Example 1; + in Reference Example 2; ○ in Reference Example 3; ☆ in Reference Example 4; ∗ in Reference Example 5; ● in Reference Example 6; x in Reference Example 7; ☆ in Comparative Reference Example 1; ◊ in Comparative Reference Example 2; Δ in Comparative Reference Example 3; and □ in Comparative Reference Example 4.

The physical properties of the molded articles obtained in Examples 1 to 3 are listed in Table 7.

## Table 1

|  | Ref.Ex. 1 | Ref.Ex. 2 |
|---|---|---|
| **Dynamic Viscoelasticiy** | | |
| **of Resin or Elastomer Composition** | | |
| $\eta*$ (170°C) (poise) | $6.6 \times 10^3$ | $5.2 \times 10^3$ |
| $\eta*$ (250°C) (poise) | $9.5 \times 10^2$ | $1.3 \times 10^3$ |
| Temp. Av. Viscosity Index k | 6.95 | 4.00 |
| **Powder Properties** | | |
| Powder Flowability (sec) | 45 | 35 |
| **Powder Moldability** | | |
| Powder Moldability | ○ | ◎ |
| Demolding Force (kg/125 mm width) | - | - |
| **Physical Properties** | | |
| **of Molded Sheet** | | |
| Break Strength (kg/cm$^2$) | 172 | 188 |
| Break Elongation (%) | 537 | 22 |

## Table 2

|  | Ref.Ex. 3 | Ref.Ex. 4 |
|---|---|---|
| Dynamic Viscoelasticiy of Resin or Elastomer Composition |  |  |
| $\eta*$ (170°C) (poise) | $1.2 \times 10^4$ | $7.0 \times 10^3$ |
| $\eta*$ (250°C) (poise) | $7.4 \times 10^3$ | $2.3 \times 10^3$ |
| Temp. Av. Viscosity Index k | 1.62 | 3.04 |
| Powder Properties |  |  |
| Powder Flowability (sec) | 15 | 19 |
| Powder Moldability |  |  |
| Powder Moldability | ⊚ | ⊚ |
| Demolding Force (kg/125 mm width) | 450 | 260 |
| Physical Properties of Molded Sheet |  |  |
| Break Strength (kg/cm$^2$) | 76 | 91 |
| Break Elongation (%) | 504 | 465 |

Table 3

| | Ref.Ex. 5 | Ref.Ex. 6 |
|---|---|---|
| Dynamic Viscoelasticiy of Resin or Elastomer Composition | | |
| $\eta*$ (170°C) (poise) | $6.8 \times 10^3$ | $3.1 \times 10^4$ |
| $\eta*$ (250°C) (poise) | $3.8 \times 10^3$ | $1.7 \times 10^4$ |
| Temp. Av. Viscosity Index k | 1.80 | 1.82 |
| Powder Properties | | |
| Powder Flowability (sec) | 30 | 29 |
| Powder Moldability | | |
| Powder Moldability | ○ | ○ |
| Demolding Force (kg/125 mm width) | 170 | 180 |
| Physical Properties of Molded Sheet | | |
| Break Strength (kg/cm$^2$) | 66 | 88 |
| Break Elongation (%) | 414 | 498 |

## Table 4

|  | Ref.Ex. 7 |
|---|---|
| **Dynamic Viscoelasticiy of Resin or Elastomer Composition** | |
| $\eta*$ (170°C) (poise) | $3.9 \times 10^3$ |
| $\eta*$ (250°C) (poise) | $7.5 \times 10^2$ |
| Temp. Av. Viscosity Index k | 5.20 |
| **Powder Properties** | |
| Powder Flowability (sec) | 26 |
| **Powder Moldability** | |
| Powder Moldability | ◯ to ◎ |
| Demolding Force (kg/125 mm width) | 200 |
| **Physical Properties of Molded Sheet** | |
| Break Strength (kg/cm$^2$) | 111 |
| Break Elongation (%) | 556 |

Table 5

| | Comp.Ref.Ex.1 | Comp.Ref.Ex. 2 |
|---|---|---|
| Dynamic Viscoelasticiy of Resin or Elastomer Composition | | |
| $\eta*$ (170°C) (poise) | $2.1 \times 10^5$ | $3.2 \times 10^5$ |
| $\eta*$ (250°C) (poise) | $6.7 \times 10^4$ | $1.3 \times 10^5$ |
| Temp. Av. Viscosity Index k | 3.06 | 2.46 |
| Powder Properties | | |
| Powder Flowability (sec) | 15 | 29 |
| Powder Moldability | | |
| Powder Moldability | X | X |
| Demolding Force (kg/125 mm width) | - | - |
| Physical Properties of Molded Sheet | | |
| Break Strength (kg/cm²) | 26 | 19 |
| Break Elongation (%) | 5 | 23 |

Table 6

| | Comp.Ref.Ex.3 | Comp.Ref.Ex.4 |
|---|---|---|
| Dynamic Viscoelasticiy of Resin or Elastomer Composition | | |
| $\eta*$ (170°C) (poise) | $3.9 \times 10^5$ | $1.8 \times 10^5$ |
| $\eta*$ (250°C) (poise) | $1.5 \times 10^5$ | $1.0 \times 10^3$ (at 220°C) |
| Temp. Av. Viscosity Index k | 2.53 | $\geqq 180$ |
| Powder Properties | | |
| Powder Flowability (sec) | 63 | 13 |
| Powder Moldability | | |
| Powder Moldability | X | X |
| Demolding Force (kg/125 mm width) | - | - |
| Physical Properties of Molded Sheet | | |
| Break Strength (kg/cm²) | - | - |
| Break Elongation (%) | - | - |

Table 7

| Phys. Properties of Molded Articles | | |
|---|---|---|
| | Break Strength (kg/cm$^2$) | Break Elongation (%) |
| Ex. 1 | 88 | 520 |
| Ex. 2 | 96 | 498 |
| Ex. 3 | 114 | 522 |

As described above, the present invention can provide a thermoplastic resin or thermoplastic elastomer powder for powder molding which resin or elastomer powder maintains a high flowability under the conditions of a low temperature atmosphere and almost no applied pressure for molding and from which a molded article having no pinholes and a sufficiently high thermally fused strength among powder particles can be obtained by feeding the resin or elastomer powder on the internal surface of a mold without spraying by a spray gun, etc., a powder molding method using the same and a molded article thereof.

## Claims

1. A powder for use In powder molding comprising a thermoplastic resin or thermoplastic elastomer composition, said resin or composition having a complex dynamic viscosity $\eta*$ (170°C) of $1.5 \times 10^4$ Pas ($1.5 \times 10^5$ poise) or less, as measured at an atmospheric temperature of 170°C and a complex dynamic viscosity $\eta*$ (250°C) of $5.0 \times 10^3$ Pas ($5.0 \times 10^4$ poise) or less, as measured at an atmospheric temperature of 250°C, in dynamic viscoelasticity measurements at a frequency of 1 radian/sec and a temperature average viscosity index k, calculated from the following formula, of 10 or less:
$$k = \eta * (170°C)/\eta * (250°C)$$

2. A powder according to claim 1, wherein the thermoplastic resin is a polyolefin resin.

3. A powder according to claim 1, wherein the thermoplastic elastomer composition is an olefin thermoplastic elastomer composition.

4. A powder according to claim 1, 2 or 3, wherein the powder comprises 100 parts by weight of the thermoplastic resin or thermoplastic elastomer composition and 2 parts by weight or less of a methylpolysiloxane compound.

5. A powder according to claim 4, wherein the methylpolysiloxane compound is a dimethylpolysiloxane.

6. A powder molding method, which comprises molding a powder as claimed in any one of claims 1 to 5.

7. A method according to claim 6, which is a powder slush molding method.

8. A method according to claim 6 or 7 wherein the molding temperature is less than 210°C.

9. A molded article obtainable by powder molding a powder as claimed in any one of claims 1 to 5.

10. A molded article according to claim 9, wherein the powder molding is powder slush molding.

# Fig. 1

# Fig.2

# Fig. 3

# Fig. 4

*Fig. 5*

*Fig. 6*

Fig. 7

**European Patent Office**

## EUROPEAN SEARCH REPORT

Application Number

EP 93 30 0409

### DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| P,X | EP-A-0 482 778 (SUMITOMO CHEMICAL COMPANY, LIMITED) * page 4, line 16 - line 31; claims 2-19; examples 4,6 * | 1-10 | B29C41/18 B29C41/00 C08L23/10 C08L23/16 |
| X | DATABASE WPIL Week 9211, Derwent Publications Ltd., London, GB; AN 92-083687 & JP-A-4 025 517 (MITSUI PETROCHEM IND KK) 29 January 1992 * abstract * | 1-5 | |
| D,A | PATENT ABSTRACTS OF JAPAN vol. 14, no. 224 (M-972)11 May 1990 & JP-A-20 57 310 ( MITSUI PETROCHEM IND LTD ) 27 February 1990 * abstract * | 1-10 | |
| | | | TECHNICAL FIELDS SEARCHED (Int. Cl.5) B29C C08L |

The present search report has been drawn up for all claims

| Place of search | Date of completion of the search | Examiner |
|---|---|---|
| THE HAGUE | 28 JUNE 1993 | VAN NIEUWENHUIZE O. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P0401)